# EUROPÄISCHE PATENTANMELDUNG

(11) **EP 0 660 001 A1**
(43) Veröffentlichungstag der Anmeldung: **28.06.1995**
(21) Anmeldenummer: 93118184.6
(22) Anmeldetag: 10.11.1993
(51) Int. Cl.: F04F 3/00, F04F 1/18, C02F 1/00, B01D 19/00, C02F 9/00

(54) **Fördervorrichtung für empfindliche Flüssigkeiten**

(71) Anmelder: IEG Industrie-Engineering GmbH, D-72770 Reutlingen (DE)
(72) Erfinder: Bernhardt, Bruno, D-72764 Reutlingen (DE)
(74) Vertreter: Möbus, Rudolf, Dipl.-Ing.

(57) **Zusammenfassung**

Die Fördervorrichtung ist durch einen Unterdruckerzeuger (19) betrieben, mit dessen Hilfe empfindliche Flüssigkeiten schonend beispielsweise aus einem biologischen Klärbecken (10) über ein Steigrohr (14) in eine Sammelkammer (15) anhebbar ist und aus dieser Sammelkammer beispielsweise in ein höher gelegenes biologisches Klärbecken (11) auslaufen kann.

## Beschreibung

Die Erfindung betrifft eine Fördervorrichtung für empfindliche Flüssigkeiten, beispielsweise für biologische Kläranlagen, mit einem Steigrohr für die zu bewegende Flüssigkeit, das mit seiner oberen Öffnung in einer Sammelkammer endet, die in ihrem bodennahen Bereich mindestens eine Ableitungsöffnung aufweist, die höher liegt als das untere offene Ende des Steigrohres.

Bisher ist es üblich, außerhalb des Laborbereiches im praktischen technischen Einsatz empfindliche Flüssigkeiten, beispielsweise mit Bakterienkulturen versehene Klärwässer, mittels Förderpumpen mit bewegten Förderschnecken oder anderen mechanischen Förderorganen auf ein höher gelegenes Niveau zu fördern. Dabei zeigt sich aber, daß durch eine mechanische Einwirkung der Förderorgane auf die Bakterienkulturen ein merklicher Anteil dieser Kulturen zerstört wird. Mit mechanischen Förderorganen versehene Fördervorrichtungen bewirken außerdem zwangsläufig eine stärkere Verwirbelung der geförderten Flüssigkeit, die nicht in jedem Falle erwünscht ist. Auch kann beim Fördervorgang die Temperatur der Flüssigkeit so stark verändert werden, daß beispielsweise bei der bereits erwähnten Förderung von unter biologischer Behandlung stehenden Klärwässern die Aktivität der eingebrachten Bakterien stark beeinträchtigt werden kann, da die hier eingesetzten Bakterien mit ihren Enzymen äußerst druck- und temperaturempfindlich sind.

Fördervorrichtungen mit den eingangs genannten Vorrichtungsmerkmalen sind von sogenannten Notbrunnen her bekannt, bei welchen mit Hilfe von eingeführter Druckluft Flüssigkeit aus einem Brunnenschacht in eine Sammelkammer hochgedrückt wird. Eine solche Druckförderung ist jedoch mit verschiedenen Nachteilen verbunden, die ihren Einsatz zum Fördern empfindlicher Flüssigkeiten auf ein höheres Flüssigkeitsniveau weitgehend ausschließt. Die Drucklufterzeugung ist energieaufwendig und führt zu einer starken Erwärmung der als Fördermittel eingesetzten Luft, und diese Erwärmung überträgt sich zwangsläufig auf die geförderte Flüssigkeit. Außerdem setzt das Druckförderverfahren eine bestimmte Wasserhöhe in einem Brunnenschacht oder einem Behälter über der Druckluft-Eintragungsstelle voraus, wenn die Druckluft auch tatsächlich eine echte Hebewirkung auf die Flüssigkeit haben soll.

Der Erfindung liegt die Aufgabe zugrunde, eine Fördervorrichtung für empfindliche Flüssigkeiten zu schaffen, die eine schonende Behandlung dieser Flüssigkeiten gewährleistet.

Die gestellte Aufgabe wird mit einer Fördervorrichtung mit den eingangs genannten Merkmalen gelöst, bei welcher die Sammelkammer zur Erzeugung eines Unterdrucks geschlossen ist und in ihrem oberen Bereich eine mit der Ansaugseite eines Unterdruckerzeugers verbindbare Öffnung aufweist.

Die erfindungsgemäß ausgebildete Fördervorrichtung nach Art einer Saughebevorrichtung ist nicht von der Höhe des Flüssigkeitsspiegels in dem Flüssigkeitsentnahmeraum abhängig und läßt sich im Vergleich mit einer Druckluft-Hebevorrichtung mit einem wesentlich kleineren Energieaufwand betreiben. Die Saugluft liegt stets unter der Umgebungstemperatur, so daß bei der Flüssigkeitsförderung eine auftretende unerwünschte Temperaturerhöhung vermieden werden kann. Eine unmittelbare Druckbelastung der Flüssigkeit, wie sie beim Einpressen von Druckluft in eine Flüssigkeit auftritt und die zu Ausfällungen von Flüssigkeitsbestandteilen führen kann, wird bei der erfindungsgemäß ausgebildeten Fördervorrichtung je nach Ausführungsart ganz oder weitgehend vermieden. Die Fördervorrichtung eignet sich daher hervorragend für das Anheben von Klärwässern in biologischen Kläranlagen, weil sie keine schädigende Wirkung auf die eingesetzten Bakterien hat. Vorteilhaft ist hier wie auch in anderen Anwendungsfällen, daß mit der Fördervorrichtung ein großflächiges Anheben von Flüssigkeit erfolgen kann. Daß bei dem Saughebeverfahren die Förderhöhe begrenzt ist, stellt keinen echten Nachteil dar, weil größere Höhenunterschiede, hier beispielsweise Höhen über 6 bis 7 m, durch mehrere aufeinanderfolgende, jeweils mindestens eine Fördervorrichtung aufweisende Hebestufen bewältigt werden können.

Die erfindungsgemäß ausgebildete Fördervorrichtung kann je nach Anwendungsfall einen unterschiedlichen Aufbau haben. Beispielsweise kann die Ausgangsseite des Unterdruckerzeugers mit einer in dem Steigrohr mündenden Gasleitung verbunden sein, wenn die zu fördernde empfindliche Flüssigkeit nicht mit Luft, sondern einem inerten Gas in Verbindung kommen soll, oder wenn die Flüssigkeit gleichzeitig einer Behandlung mit einem bestimmten Gas unterzogen werden soll, das dann im geschlossenen Kreislaufsystem zur Vermeidung von Gasverlusten einsetzbar ist.

Die obere Öffnung des Steigrohres kann zweckmäßig einen Überlaufrand für die in die Sammelkammer zu fördernde Flüssigkeit bilden, wobei in dem Bereich zwischen dem Überlaufrand des Steigrohres und den Seitenwänden der Sammelkammer für bestimmte Anwendungsfälle auch Leit- und/oder Siebwandungen für die Flüssigkeit angeordnet sein können. Vorteilhaft in bezug auf eine erzielbare Förderhöhe, einen geringen Energieverbrauch und auch eine angestrebte pflegliche Behandlung der empfindlichen Flüssigkeit ist ein intermittierender Betrieb der Fördervorrichtung, zu welchem Zweck die obere Öffnung des Steigrohres und/oder die Ableitungsöffnung und/oder die Unterdrucköffnung der Sammelkammer zeitweilig verschließbar ausgebildet sein können. Für den Verschluß der Öffnungen, insbesondere der oberen Ansaugöffnung der Sammelkammer, können vorteilhafterweise mit einem schwimmkörper gekoppelte Ventilglieder eingesetzt werden. Auch bei einem intermittierenden Betrieb einer Fördervorrichtung kann eine kontinuierliche Förderung erreicht werden, indem vorteilhafterweise zwei Fördervorrichtungen mit gesonderten Sammelkammern eingesetzt werden, bei welchen alle drei vorstehend erwähnten Öffnungen mittels Ventilgliedern verschließbar sind und das Ventilglied für den Verschluß der oberen Absaugöffnung der ersten Sammelkammer mit einem entsprechenden Ventilglied für den Verschluß der oberen Absaugöffnung der im Wechsel mit der ersten Sammelkammer betreibbaren zweiten und an eine gemeinsame Unterdruckwelle angeschlossenen Sammelkammer dergestalt gekoppelt ist, daß, wenn das Ventilglied die Absaugöffnung der ersten oder zweiten Sammelkammer verschließt, die Absaugöffnung der zweiten oder ersten Sammelkammer durch das andere Ventilglied freigegeben ist. Hierbei können zweckmäßig in beiden Sammelkammern die Ventilglieder der Steigrohröffnung und der Ableitungsöffnung so miteinander gekoppelt sein, daß, wenn die eine Öffnung geschlossen jeweils die andere Öffnung geöffnet ist.

Nachfolgend werden Ausführungsbeispiele des Erfindungsgegenstandes anhand der beiliegenden schematischen Zeichnung näher erläutert.

Im einzelnen zeigen:
- Fig. 1: ein erstes Ausführungsbeispiel der Fördervorrichtung im Schema;
- Fig. 2: ein zweites Ausführungsbeispiel der Fördervorrichtung, ebenfalls in schematischer Darstellung;
- Fig. 3: eine schematische Darstellung des ersten Ausführungsbeispieles auf einem anderen Anwendungsgebiet;
- Fig. 4: eine schematische Darstellung des zweiten Ausführungsbeispiels, ebenfalls auf einem anderen Anwendungsgebiet.

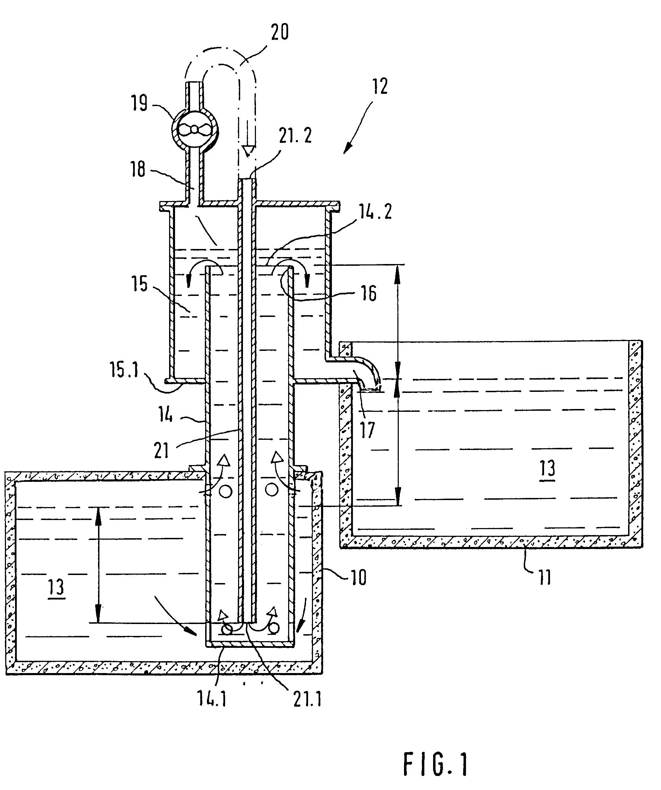

Fig. 1 zeigt ein erstes biologisches Klärbecken 10 und ein zweites, höher liegendes biologisches Klärbecken 11 sowie eine Fördervorrichtung 12 zum Hochfördern des mit Bakterienkulturen versetzten Klärwassers 13 aus dem ersten biologischen Klärbecken 10 in das zweite biologische Klärbecken 11. Die Fördervorrichtung 12 weist ein Steigrohr 14 auf, das mit seinem unteren, seitlich offenen Ende 14.1 in das erste Klärbecken 10 hineinragt. Das Steigrohr 14 ragt durch deren Boden 15.1 in eine Sammelkammer 15, und sein oberes offenes Ende 14.2 bildet mit Abstand von dem Boden 15.1 der Sammelkammer einen Überlaufrand 16 für die zu fördernde Flüssigkeit. Die Sammelkammer 15 wird von einem geschlossenen Behälter gebildet, der an seinem Boden eine seitliche Ableitungsöffnung 17 und eine obere Öffnung 18 aufweist. Die Ableitungsöffnung 17 führt in den zweiten biologischen Klärbehälter 11. Die obere Öffnung 18 ist mit der Ansaugseite eines zu Unterdruckbildung eingesetzten Ventilators 19 verbunden. Die Druckseite des Ventilators 19 kann über ein mit strichpunktierten Linien angedeutetes Verbindungsrohr 20 mit einem durch die Sammelkammer 15 und zentral durch das Steigrohr von oben nach unten bis in den Bereich des unteren Endes 14.1 des Steigrohres hindurchgeführtes Gasleitungsrohr 21 verbunden sein. Das Gasleitungsrohr 21 ist an seinem unteren Ende 21.1 offen. Bei fehlender Verbindungsleitung 20 ist das Gasleitungsrohr 21 auch an seinem oberen Ende 21.2 offen und erlaubt dann das druckfreie Nach-strömen von Luft in den unteren Bereich des Steigrohres 14.

Beim Einschalten des Ventilators 19 wird das in biologischer Behandlung stehende Klärwasser 13 aus dem unteren biologischen Klärbecken 10 in dem Steigrohr 14 durch den in der geschlossenen Sammelkammer 15 gebildeten Unterdruck hochgezogen und fließt über den Überlaufrand 16 des Steigrohres 14 in die Sammelkammer 15 und von dort aus durch die Ableitungsöffnung 17 in das höher gelegene zweite biologische Klärbecken 11. Durch das Gasleitungsrohr 21 kann bei freier oberer Öffnung 21.2 dieses Rohres Luft von außen in das Steigrohr 14 nachströmen, die dann in der Flüssigkeit im Steigrohr in Luftblasen nach oben steigt. Dabei erfolgt eine Begasung des Klärwassers beim Hochfördern. Wo bei dieser Begasung das Eindringen von Sauerstoff in das Klärwasser vermieden werden soll, kann für die Begasung auch ein inertes Gas verwendet werden, das mittels des zur Unterdruckbildung in der Sammelkammer eingesetzten Ventilators 19 in einem geschlossenen Kreislauf über die Verbindungsleitung 20 und die Gasleitung 21 laufend in das Steigrohr zwangsweise zurückgeführt wird. Das Gas kann Nährstoffe für anaerobe Bakterien enthalten.

Zwischen dem Überlaufrand 16 des Steigrohres 14 und der das Steigrohr mit Abstand umgebenden Innenwandung der Sammelkammer 15 können in nicht dargestellter Weise ein schonendes Abfließen des geförderten Klärwassers in die Sammelkammer gewährleistende Leitwandungen oder Siebwandungen zum Zurückhalten von Festkörpern und Verklumpungen angeordnet sein. An seinem unteren Ende kann das Gasleitungsrohr 21 zur Begünstigung der Gasblasenbildung als Düsenkörper ausgestaltet sein.

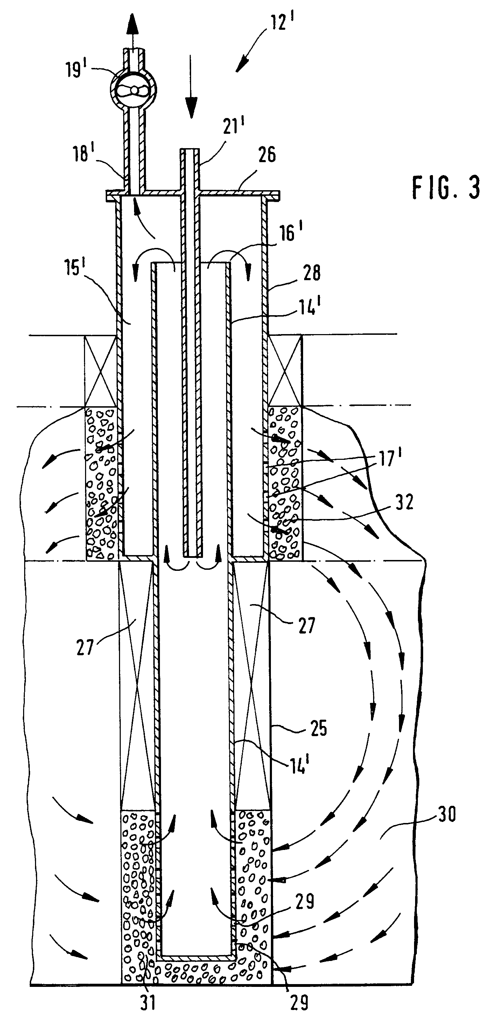

Fig. 3 zeigt eine nach dem Prinzip der Fördervorrichtung nach Fig. 1 aufgebaute Fördervorrichtung in der Anwendung als in ein Bohrloch 25 eingesetzte Vorrichtung zur Erzwingung eines Grundwasserkreislaufes durch den Bohrschacht 25 hindurch unter schonender Behandlung dieses Grundwassers. Die schonende Behandlung des Grundwassers kann durch biologische oder chemische Zusätze im Grundwasser gefordert sein, die durch stärkere Druckdifferenzen oder Temperaturänderungen in unerwünschter Weise beeinflußt würden. In Fig. 3 sind der Ausführungsform nach Fig. 1 entsprechende Teile mit den gleichen Bezugsziffern, ergänzt durch einen Indexstrich, bezeichnet. Die Sammelkammer 15' wird hier durch einen nach oben durch einen Deckel 26 und nach unten durch eingesetzte Dichtungen 27 verschlossenen, den Bohrschacht 25 auskleidenden Schachtrohrabschnitt gebildet. Die Ableitungsöffnung 17 nach Fig. 1 ist durch einen mit Lochungen 17' versehenen unteren Bereich des Rohrabschnittes 28 ersetzt. Das Steigrohr 14' ragt über den mit den Abdichtungen 27 versehenen Bereich des Bohrschachtes 25 hinaus in den unteren Endbereich des Bohrschachtes, wo Öffnungen 29 im Steigrohr 14' das durch Pfeile angedeutete Einfließen von Grundwasser aus dem umgebenden Erdreich 30 über eine Kiesummantelung 31 in das Steigrohr 14 ermöglichen. Durch den Ventilator 19' wird in der Sammelkammer 15' Unterdruck erzeugt, durch welchen das Grundwasser im Steigrohr 14' nach oben hochgezogen wird und über den Überlaufrand 16 in die Sammelkammer 15' und durch die Öffnungen 17' und einen äußeren Kiesmantel 32 zurück in das Erdreich 30 fließt. Durch das zentrale Gasleitungsrohr 21' kann von außen Luft in das Steigrohr 14' nachströmen und in Blasen durch das im Steigrohr 14' hochsteigende Grundwasser hindurch nach oben aufsteigen.

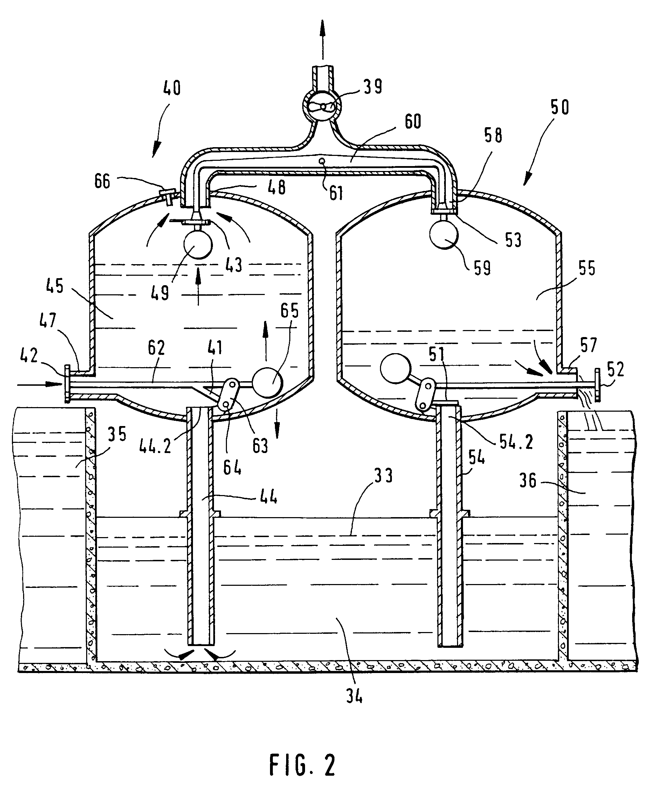

Fig. 2 zeigt eine Anordnung von zwei gleichen Fördervorrichtungen 40 und 50, die an einen gemeinsamen Unterdruckerzeuger 39 angeschlossen sind. Mit dieser Anordnung wird Klärwasser 33 aus einem ersten Klärbecken 34 oder Kanal in zwei benachbarte Klärbecken 35 und 36 oder Kanäle gefördert. Jede der beiden Fördervorrichtungen 40 und 50 weist eine durch einen geschlossenen Behälter gebildete Sammelkammer 45 oder 55 auf, in welche jeweils ein in das erste biologische Klärbecken 34 ragendes Steigrohr 44 oder 54 mündet. Die Sammelkammer 45 der ersten Fördervorrichtung weist eine in das biologische Klärbecken 35 führende Ableitungsöffnung 47 auf, während die Ableitungsöffnung 57 der Sammelkammer 55 der anderen Fördervorrichtung 50 in das biologische Klärbecken 36 führt. Die oberen Unterdrucköffnungen 48 oder 58 der Sammelkammern 45 oder 55 sind beide mit der Ansaugseite des Unterdruckerzeugers 39 verbunden.

Für alle Öffnungen der Sammelkammern 45 oder 55 sind Schließglieder 41 bzw. 51, 42 bzw. 52 und 43 bzw. 53 vorhanden. Die Schließglieder 43 und 53 für die obere Unterdrucköffnung 48 oder 58 der Sammelkammern 45 oder 55 sind jeweils mit einem Schwimmkörper 49 oder 59 gekoppelt und befinden sich jeweils am Ende eines gemeinsamen Waagebalkens 60, der an der Stelle 61 verschwenkbar gelagert ist. Die Anordnung ist so getroffen, daß, wenn beispielsweise gemäß Fig. 2 die obere Absaugöffnung 58 der Fördervorrichtung 50 durch das Schließglied 53 verschlossen ist, das über den Waagebalken 60 mit diesem Schließglied 53 gekoppelte Schließglied 43 der Fördervorrichtung 40 von der oberen Unterdrucköffnung 48 abgehoben ist, also die Sammelkammer 45 der Fördervorrichtung 40 unter Unterdruck steht, die Sammelkammer 55 der Fördervorrichtung 50 dagegen nicht mehr.

Zwischen den Schließgliedern 41, 42 für die obere Öffnung 44.2 des Steigrohres 44 und für die Ableitungsöffnung 47 besteht eine gegenseitige Koppelung über eine Verbindungsstange 62 und über einen Lenker 63, der einerseits an der Verbindungsstange 62 und anderseits an einer stationären Lagerstelle 64 angelenkt ist. Die Koppelung der beiden Schließglieder 41 und 42 ist dergestalt, daß, wenn das Schließglied 41 von der oberen Steigrohröffnung 44.2 abgehoben ist, die Ableitungsöffnung 47 durch das Schließglied 42 verschlossen ist oder umgekehrt. Der umgekehrte Fall ist in Fig. 2 an der Fördervorrichtung 50 ersichtlich, wo die obere Steigrohröffnung 54.2 durch das Schließglied 51 verschlossen ist, während das Schließglied 52 von der Ableitungsöffnung 57 abgehoben ist.

Bei der aus Fig. 2 ersichtlichen Stellung des Waagebalkens 60 wird durch den in der Sammelkammer 45 erzeugten Unterdruck durch das Steigrohr 44 Klärwasser 33 in die Sammelkammer 45 hochgesaugt, bis das hochsteigende Klärwasser auf den Schwimmkörper 49 trifft, der schließlich das Schließglied 43 gegen die obere Unterdrucköffnung 48 drückt und die Unterdruckwirkung in der Sammelkammer 45 unterbricht. Das Verbindungsgestänge 62/63 zwischen den beiden Schließgliedern 41 und 42 ist so ausgelegt, daß nach Fortfall der Unterdruckwirkung durch den Schwimmkörper 65 eine Verschiebung des Gestänges in die an der Fördervorrichtung 50 gezeigte Lage erfolgt, also die obere Öffnung 44.2 des Steigrohres 44 durch das Schließglied 41 verschlossen wird und das Schließglied 42 von der Ableitungsöffnung 47 abgehoben wird. Da über ein Ventil 66 gleichzeitig eine Entlüftung des flüssigkeitsfreien Teiles der Sammelkammer 45 erfolgt, kann das in die Sammelkammer 45 hochgeförderte Klärwasser durch die Ableitungsöffnung 47 in das biologische Klärbecken 35 auslaufen, so wie dies in Fig. 2 an der Fördervorrichtung 50 ersichtlich ist. Wenn das hochgeförderte Klärwasser ausgelaufen ist, sinkt der Schwimmkörper 65 nach unten, und das Verbindungsgestänge 62/63 verschließt dadurch die Ableitungsöffnung 47 oder 57 der betreffenden Fördervorrichtung 40 oder 50 und öffnet wieder das zugehörige Steigrohr 44 oder 54. Bis bei der aus Fig. 2 ersichtlichen Betriebsstellung der Anordnung der Sammelbehälter 55 ausgelaufen ist, hat sich die Sammelkammer 45 gefüllt und das Schließglied 43 nach oben gegen die Unterdrucköffnung 48 gelegt. Gleichzeitig hat sich der Waagebalken 60 verschwenkt und das Schließglied 53 von der Unterdrucköffnung 58 abgehoben, so daß jetzt die Sammelkammer 55 unter Unterdruck gesetzt ist und über das Steigrohr 54 wieder Klärwasser aus dem biologischen Klärbecken 34 hochgesaugt wird.

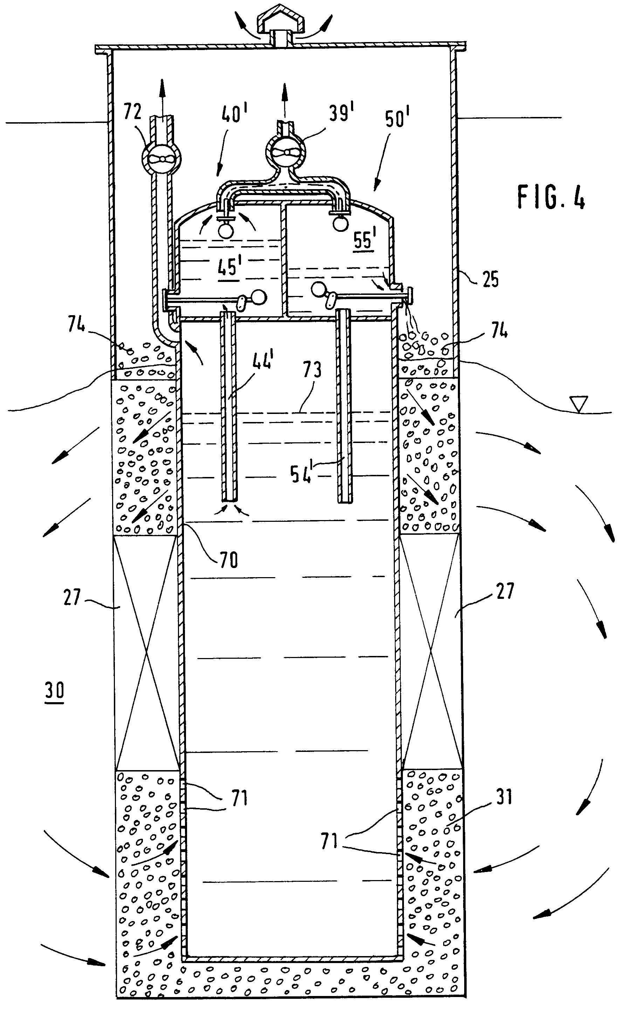

Fig. 4 zeigt die Anordnung nach Fig. 2 beim Einsatz in einem Bohrloch 25 zur Erzeugung einer Grundwasser-Kreislaufströmung der bereits in Verbindung mit Fig. 3 beschriebenen Art. In Fig. 4 sind die der Ausführungsform nach Fig. 2 entsprechenden Teile mit den gleichen Bezugsziffern wie in Fig. 2, ergänzt durch einen Indexstrich, bezeichnet. Innerhalb des Bohrloches 25 ist ein Behälter 70 eingesetzt, der in seinem unteren Bereich Öffnungen 71 aufweist, durch welche Grundwasser aus dem umgebenden Erdreich 30 über eine filternde Kiesschicht 31 einströmen kann. In diesen Behälter 70 ragen die Steigrohre 44' und 54' der beiden Fördervorrichtungen 40' und 50', deren Sammelkammern 45' und 55' in genau gleicher Weise wie beim Ausführungsbeispiel nach Fig. 2 miteinander gekoppelt und hinsichtlich der Ventilglieder für ihre Öffnungen gleich wie in Fig. 2 ausgestaltet sind.

Um eine größere Förderhöhe zu erreichen oder zur Berücksichtigung größerer Wasserspiegelschwankungen ist mittels eines zusätzlichen Ventilators 72 auch der Behälter 70 unter Unterdruck gesetzt und dadurch der Grundwasserspiegel 73 angehoben. Die Anordnung nach Fig. 2 bildet hier also eine zweite Förderstufe. Rings um den oberen Teil des Behälters 70 kann eine Schicht 74 von Filterstoffen für das auslaufende geförderte Grundwasser angordnet sein. Die Förderung des Grundwassers erfolgt sehr schonend ohne Energieeintrag in das Wasser, so daß eine zu unerwünschten Ausfällungen führende Strömung des Phasengleichgewichtes der in ihm gelösten Stoffe mindestens weitgehend vermieden wird.

Auch bei der in Fig. 2 gezeigten Anwendung kann die Fördervorrichtung als zweite Förderstufe eingesetzt werden, wenn das Becken 34 oder der Kanal nach oben verschlossen ist und der Raum oberhalb des Wasserspiegels mittels eines zweiten Ventilators unter Unterdruck gesetzt wird, um als erste Förderstufe den Wasserspiegel im Becken 34 anzuheben.

## Patentansprüche

1. Fördervorrichtung für empfindliche Flüssigkeiten, bei spielsweise für biologische Kläranlagen, mit einem Steigrohr (14; 44; 54) für die zu bewegende Flüssigkeit, das mit seiner oberen Öffnung (14.2; 44.2; 54.2) in einer Sammelkammer (15; 45; 55) endet, die an ihrem bodennahen Bereich mindestens eine Ableitungsöffnung (17; 47; 57) aufweist, die höher liegt als der untere Flüssigkeitsspiegel, dadurch gekennzeichnet, daß die Sammelkammer (15; 45; 55) zur Erzeugung eines Unterdrucks geschlossen ist und in ihrem oberen Bereich eine mit der Ansaugseite eines Unterdruckerzeugers (19; 39) verbindbare Öffnung (18; 48; 58) aufweist.

2. Fördervorrichtung nach Anspruch 1, dadurch gekennzeichnet, daß die Ausgangsseite des Unterdruckerzeugers mit einer in dem Steigrohr (14) mündenden Gasleitung (21) verbunden ist.

3. Fördervorrichtung nach Anspruch 1 oder 2, dadurch gekennzeichnet, daß die obere Öffnung (14.2) des Steigrohres (14) einen Überlaufrand (16) für die zu fördernde Flüssigkeit bildet.

4. Fördervorrichtung nach einem der Ansprüche 1 bis 3, dadurch gekennzeichnet, daß die obere Öffnung (44.2; 54.2) des Steigrohres (44; 54) zeitweilig verschließbar ausgebildet ist.

5. Fördervorrichtung nach einem der Ansprüche 1 bis 4, dadurch gekennzeichnet, daß in dem Bereich zwischen dem Überlaufrand (16) des Steigrohres (14) und den Seitenwänden der Sammelkammer (15) Leit- und/oder siebwandungen angeordnet sind.

6. Fördervorrichtung nach einem der Ansprüche 1 bis 5, dadurch gekennzeichnet, daß die obere Öffnung (48; 58) der geschlossenen Sammelkammer (45; 55) zeitweilig verschließbar ausgebildet ist.

7. Fördervorrichtung nach Anspruch 6, dadurch gekennzeichnet, daß die obere Öffnung (48; 58) der Sammelkammer (45; 55) mittels eines mit einem Schwimmkörper (49; 59) gekoppelten Ventilgliedes (43; 53) verschließbar ist.

8. Fördervorrichtung nach einem der Ansprüche 4 bis 7, dadurch gekennzeichnet, daß die Sammelkammer (45; 55) aus einem geschlossenen, die obere Unterdrucköffnung (48; 58), die obere Steigrohröffnung (44.2; 54.2) und die bodennahe Ableitungsöffnung (47; 57) aufweisenden Behälter besteht, alle drei Öffnungen mittels Ventilgliedern (41, 42, 43; 51, 52, 53) verschließbar sind und die Ventilglieder (41, 42; 51, 52) der Steigrohröffnung (44.2; 54.2) und der Ableitungsöffnung (47; 57) so miteinander gekoppelt sind, daß, wenn die eine Öffnung geschlossen jeweils die andere Öffnung geöffnet ist.

9. Fördervorrichtung nach Anspruch 7 oder 8, dadurch gekennzeichnet, daß das Ventilglied (43) für den Verschluß der oberen Unterdrucköffnung (48) der Sammelkammer (45) mit einem entsprechenden Ventilglied (53) für den Verschluß der oberen Unterdrucköffnung (58) einer im Wechsel mit dieser ersten Sammelkammer (45) betreibbaren, an eine gemeinsame Unterdruckquelle (39) angeschlossenen zweiten Sammelkammer (55) dergestalt gekoppelt ist, daß, wenn das eine Ventilglied (43) die Unterdrucköffnung (48) der ersten oder zweiten Sammelkammer (45; 55) verschließt, die Unterdrucköffnung (58) der anderen Sammelkammer (55) durch das andere Ventilglied (53) freigegeben ist.

10. Fördervorrichtung nach Anspruch 9, dadurch gekennzeichnet, daß die Ventilglieder (43; 53) zum Verschließen der Unterdrucköffnung (48; 58) der beiden Sammelkammern (45; 55) jeweils mit einem Schwimmkörper (49; 59) gekoppelt und jeweils an einem der beiden Enden eines Waagebalkens (60) angeordnet sind.

11. Fördervorrichtung nach Anspruch 1 und 2, dadurch gekennzeichnet, daß an der Mündung (21.1) der Gasleitung (21) in das Steigrohr (14) ein Düsenkörper ausgebildet ist.

12. Fördervorrichtung nach einem der Ansprüche 1 bis 11, dadurch gekennzeichnet, daß das Steigrohr (44', 54') nach unten in einen Flüssigkeitsraum ragt, in welchem bereits der Flüssigkeitsspiegel (73) durch Unterdruckbildung mittels eines zusätzlichen Ventilators (72) angehoben ist.
